# EUROPEAN PATENT APPLICATION

(11) **EP 3 450 114 A1**
(43) Date of publication of application: **06.03.2019**
(21) Application number: 17789252.8
(22) Date of filing: 11.04.2017
(51) Int. Cl.: B25J 5/00, A63H 11/00

(54) **ROBOT**

(30) Priority: 27.04.2016 JP 2016088771
(71) Applicant: Panasonic Intellectual Property Management Co., Ltd., Osaka-shi, Osaka 540-6207 (JP)
(72) Inventor: OGAWA, Kento, Osaka-shi, Osaka 540-6207 (JP); MIYAZAKI, Ryouta, Osaka-shi, Osaka 540-6207 (JP); SASAGAWA, Michiko, Osaka-shi, Osaka 540-6207 (JP); KUNITAKE, Yuji, Osaka-shi, Osaka 540-6207 (JP); HIGUCHI, Seiya, Osaka-shi, Osaka 540-6207 (JP)
(74) Representative: Grünecker Patent- und Rechtsanwälte PartG mbB
(86) International application number: PCT/JP2017/014820
(87) International publication number: WO 2017/187965

(57) **Abstract**

A robot 1 has: a housing (101) like a spherical body; a frame (102) disposed in the interior of the housing (101); a displayer (205) attached to the frame (102), the displayer (205) displaying at least part of the face; a set of driving wheels (206) attached to the frame (102), the set of driving wheels (206) being in contact with the inner circumferential surface of the housing (101) to rotate the housing (101); a weight driving mechanism (208) attached to the frame (102), the weight driving mechanism (208) causing a weight (114) to reciprocate in a predetermined direction; a power supply (210) that charges electric power from an external battery charger (2) and supplies the electric power to the set of driving wheels (206) and the weight driving mechanism (208); and a control circuit that if the amount of remaining electric power in the power supply (210) is equal to or less than a predetermined value in a state in which electric power from the battery charger (2) is not being charged, stops the rotation of the set of driving wheels (206) and reciprocates the weight (114) in the predetermined direction to reciprocate the displayer (205) in the up-and-down direction.

## Description

### Technical Field

The present disclosure relates to a robot driven by electric power charged from a battery charger.

### Background Art

Various types of robots have been conventionally proposed.

PTL 1 discloses a dog-type pet robot. In PTL 1, a battery charger that charges a pet robot battery is needed separately from the pet robot. The pet robot has a control circuit unit that causes the pet robot to move by walking so as to head for the battery charger when the amount of charge in the battery incorporated into the pet robot drops to or below a predetermined value (see, for example, paragraph [0024]). By contrast, when the charging of the battery incorporated into the pet robot is completed, the control circuit unit causes the pet robot to move by walking so as to be apart from the battery charger (see, for example, paragraph [0028]).

PTL 2 discloses a small walking robot resembling a four-footed animal resembling a dog or cat. In PTL 2, when a rechargeable battery for the walking robot is charged, the walking robot is made to perform a predetermined operation according to the amount of charge in the chargeable battery. For example, when the walking robot is placed on a charging stand, the walking robot is also made to take a charging-in-progress pose, representing vigourlessness, in which the head is drooping, the tail is hanging down, and the front legs and rear legs are handing down (see, for example, the twelfth to eighteenth lines on the eleventh page). By contrast, when the charging of the chargeable battery for the walking robot is completed, the walking robot is made to perform an operation to raise the neck so as to lift the head upward, an operation to swing the head upward and downward, an operation to swing the tail upward and downward or to the right and left, an operation to raise the front legs upward and swing them upward and downward or to the right and left, or an operation to stretch the entire front legs and entire rear legs and raise the body (see, for example, the twenty-third line on the eleventh page to the fourteenth page on the twelfth page).

### Citation List

### Patent Literature

PTL 1: Japanese Unexamined Patent Application Publication No. 2002-59389
PTL 2: Domestic Re-publication of PCT International Publication for Patent Application No. 2000-38295

### Summary of Invention

### Technical Problem

In the above related art, a further improvement has been needed. Solution to Problem

To solve the above problems, one aspect of the present disclosure includes:
a housing like a spherical body;
a frame disposed in the interior of the housing;
a displayer attached to the frame, the displayer displaying at least part of the face of a robot;
a set of driving wheels attached to the frame, the set of driving wheels being in contact with the inner circumferential surface of the housing to rotate the housing;
a weight driving mechanism attached to the frame, the weight driving mechanism causing a weight to reciprocate in a predetermined direction;
a power supply that charges electric power from an external battery charger and supplies the electric power to the set of driving wheels and the weight driving mechanism; and
a control circuit that if the amount of remaining electric power in the power supply is equal to or less than a predetermined value in a state in which electric power from the battery charger is not being charged, stops the rotation of the set of driving wheels and reciprocates the weight in the predetermined direction to reciprocate the displayer in the up-and-down direction.

### Advantageous Effects of Invention

A further improvement has been achieved according to the above aspect. Brief Description of Drawings

[Fig. 1] Fig. 1 is an outside shape of a robot according to a first embodiment of the present disclosure.
[Fig. 2] Fig. 2 is an internal perspective view of the robot according to the first embodiment of the present disclosure.
[Fig. 3] Fig. 3 is an internal side view of the robot according to the first embodiment of the present disclosure, as viewed from arrow A in Fig. 2.
[Fig. 4] Fig. 4 is a side view of the robot according to the first embodiment of the present disclosure, as viewed from arrow A in Fig. 2, representing a straight-ahead operation.
[Fig. 5] Fig. 5 is a plan view representing the rotational operation of the robot according to the first embodiment of the present disclosure, as viewed from arrow B in Fig. 2.
[Fig. 6] Fig. 6 is a perspective view representing the rotational operation of the robot according to the first embodiment of the present disclosure.
[Fig. 7] Fig. 7 is a drawing indicating a driving mechanism for a counterweight (weight) in the side view in Fig. 3.
[Fig. 8A] Fig. 8A is a perspective view illustrating the operation of the driving mechanism for the counterweight (weight) when the counterweight (weight) is to be driven in a predetermined linear direction.
[Fig. 8B] Fig. 8B is a side view illustrating the operation of the driving mechanism for the counterweight (weight) when the counterweight (weight) is to be driven in the predetermined linear direction.
[Fig. 8C] Fig. 8C is a side view illustrating a state in which the counterweight (weight) reciprocates in the predetermined linear direction in the side view in Fig. 3.
[Fig. 9A] Fig. 9A is a perspective view illustrating the operation of the driving mechanism for the counterweight (weight) when a swing arm is to be rotated.
[Fig. 9B] Fig. 9B is a side view illustrating the operation of the driving mechanism for the counterweight (weight) when the swing arm is to be rotated.
[Fig. 9C] Fig. 9C is a plan view illustrating a state in which the swing arm of the robot according to the first embodiment of the present disclosure rotates, as viewed from arrow B in Fig. 2.
[Fig. 10] Fig. 10 is a side view illustrating the attitude of the robot when the counterweight (weight) of the robot in the first embodiment of the present disclosure is positioned so as to be brought close to the front side, as viewed from arrow A in Fig. 2.
[Fig. 11] Fig. 11 is a side view illustrating the attitude of the robot when the counterweight (weight) of the robot in the first embodiment of the present disclosure is positioned so as to be brought close to the back side, as viewed from arrow A in Fig. 2.
[Fig. 12] Fig. 12 is a front view illustrating the attitude of the robot when the counterweight (weight) of the robot in the first embodiment of the present disclosure is positioned so as to be brought close to the right side, as viewed from arrow C in Fig. 2.
[Fig. 13] Fig. 13 is a front view illustrating the attitude of the robot when the counterweight (weight) of the robot in the first embodiment of the present disclosure is positioned so as to be brought close to the left side, as viewed from arrow C in Fig. 2.
[Fig. 14] Fig. 14 is a block diagram illustrating the robot according to the first embodiment of the present disclosure and a battery charger used to charge the robot.
[Fig. 15] Fig. 15 is a flowchart illustrating remaining power amount notification processing in the robot according to the first embodiment of the present disclosure.
[Fig. 16] Fig. 16 is a flowchart illustrating notification command transmission processing in the robot according to the first embodiment of the present disclosure.
[Fig. 17] Fig. 17 is a block diagram illustrating a robot according to a second embodiment of the present disclosure and a battery charger used to charge the robot.

### Description of Embodiments

### (Prehistory to the invention of one aspect according to the present disclosure)

First, a noteworthy point to one aspect of the present disclosure will be described.

PTL 1 and PTL 2 above relate to a dog-type pet robot. The body of the pet robot has a head, four legs, a tail, and the like. Therefore, the pet robot can inform the user of a charged state in the robot by operating the head, four legs, and tail.

In PTL 1 above, as described above, when the amount of charge of the battery incorporated into the pet robot falls to or below a predetermined value, the pet robot is made to move by walking so as to head for the battery charger. By contrast, when the charging is completed, the pet robot is made to move by walking so as to be apart from the battery charger.

In PTL 2, as described above, in a state in which the walking robot is placed on a charging stand, the walking robot is also made to take a charging-in-progress pose, representing vigourlessness, in which the head is drooping, the tail is hanging down, and the front legs and rear legs are handing down. By contrast, when the charging of the chargeable battery for the walking robot is completed, the walking robot is made to perform an operation to raise the neck so as to lift the head upward, an operation to swing the head upward and downward, an operation to swing the tail upward and downward or to the right and left, an operation to raise the front legs upward and swing them upward and downward or to the right and left, or an operation to stretch the entire front legs and entire rear legs and raise the body.

In PTL 1 above, however, when the amount of charge of the battery incorporated into the pet robot falls to or below the predetermined value, the pet robot is made to move the hands and legs to perform an operation to head for the battery charger. However, the hands and legs are not operated independently of the battery charger. Therefore, even when the amount of charge of the battery incorporated into the pet robot falls to or below the predetermined value, the pet robot does not inform the user of the charged state in the robot by operating the hands and legs independently of the battery charger.

Similarly, in PTL 2 above, the pet robot informs the user of the charged state in the robot by moving the hands and legs to take various poses in the state in which the pet robot is placed on the battery charger. However, there is no disclosure about how the pet robot informs the user of the charged state in the robot in a state in which the pet robot is not placed on the battery charger.

In PTL 1 and PTL 2 above as well, therefore, it is not possible to inform the user of the charged state in the robot independently of the battery charger. If, for example, the operation of the robot becomes slow in a state in which the battery charger is not present near the robot, the user cannot determine whether the operation has become slow due to a drop in the amount of charge or a failure.

As for a robot like a spherical body that lacks hands and legs, the robot cannot inform the user of the charged state in the robot by operating hands and legs because the robot lacks hands and legs.

As for a robot like a spherical body, if a display representing, for example, a face including eyes, a mouse, and the like is given to the surface of the robot, it is unnatural to display information about the amount of charge, which is independent of the face.

After the above considerations, the present inventor has devised various aspects of the present disclosure.

A robot in one aspect of the present disclosure includes:
a housing like a spherical body;
a frame disposed in the interior of the housing;
a displayer attached to the frame, the displayer displaying at least part of the face of the robot;
a set of driving wheels attached to the frame, the set of driving wheels being in contact with the inner circumferential surface of the housing to rotate the housing;
a weight driving mechanism attached to the frame, the weight driving mechanism causing a weight to reciprocate in a predetermined direction;
a power supply that charges electric power from an external battery charger and supplies the electric power to the set of driving wheels and the weight driving mechanism; and
a control circuit that if the amount of remaining electric power in the power supply is equal to or less than a predetermined value in a state in which electric power from the battery charger is not being charged, stops the rotation of the set of driving wheels and reciprocates the weight in the predetermined direction to reciprocate the displayer in the up-and-down direction.

According to this aspect, when the amount of remaining electric power in the power supply falls to or below a predetermined value in a state in which electric power from the battery charger is not being charged, the displayer is made to reciprocate in the up-and-down direction to represent a state in which the robot is running out of breath or is sleepy. In this case, the displayer displays part of the face of the robot, such as, for example, eyes. Therefore, without displaying the amount of remaining electric power in the power supply on the surface of the robot like a spherical body or in spite of the robot like a spherical body, for example, without hands and legs, it is possible to show the user the state of the power supply by using the rotational operation of the spherical body.

### (Embodiments)

Embodiments of the present disclosure will be described below with reference to the drawings. On the drawings, like reference numerals are used for like constituent elements.

### (First embodiment)

### (Entire structure)

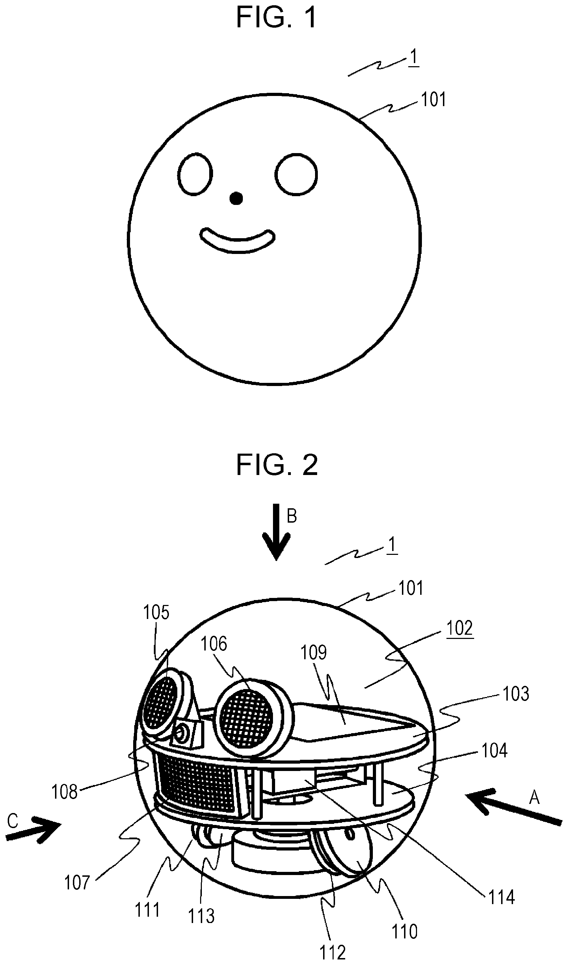

Fig. 1 is an outside shape of a robot 1 according to a first embodiment of the present disclosure. As illustrated in Fig. 1, the robot 1 has a housing 101 like a spherical body.

Fig. 2 is an internal perspective view of the robot 1 according to the first embodiment of the present disclosure.

In Fig. 2, a frame 102 is placed in the interior of the housing 101. The frame 102 has a first rotational plate 103 and a second rotational plate 104. The first rotational plate 103 is positioned above the second rotational plate 104.

As illustrated in Fig. 2, a first displayer 105 and a second displayer 106 are attached to the upper surface of the first rotational plate 103. A third displayer 107 is attached to the upper surface of the second rotational plate 104. The first displayer 105, second displayer 106, and third displayer 107 are formed from, for example, a plurality of light-emitting diodes. The first displayer 105, second displayer 106, and third displayer 107 display display information about an expression of the robot. Specifically, as illustrated in Fig. 1, the first displayer 105, second displayer 106, and third displayer 107 display part of the face of the robot 1, such as, for example, eyes and a mouse, by individually controlling the lighting of the plurality of light-emitting diodes.

A camera 108 is attached to the upper surface of the first rotational plate 103 as illustrated in Fig. 2. The camera 108 captures an image of an environment around the robot 1. The camera 108 forms part of the face of the robot 1, such as, for example, a nose, as illustrated in Fig. 1.

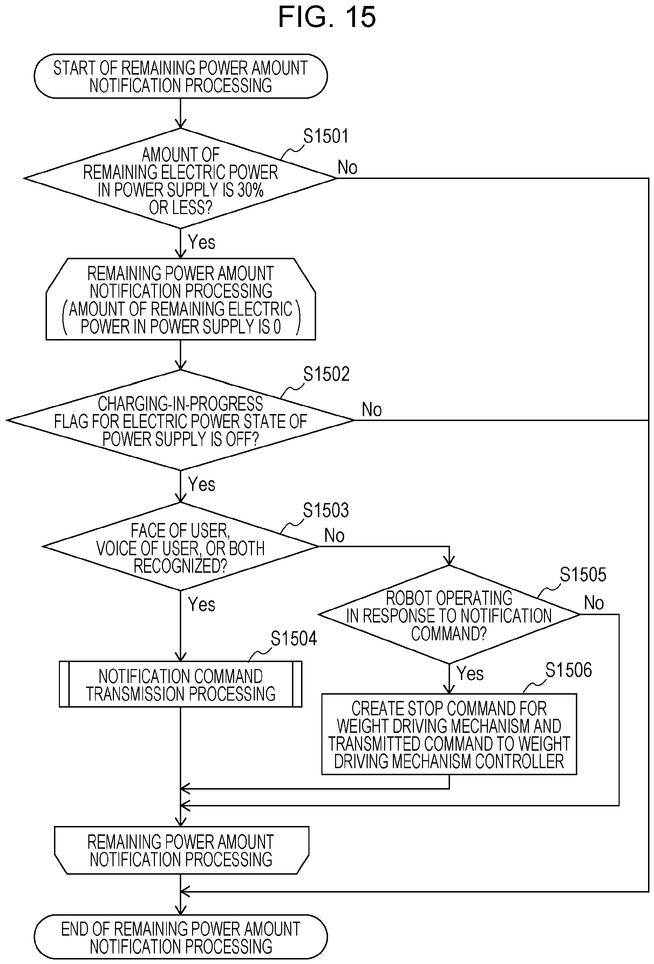

A control circuit 109 is attached to the upper surface of the first rotational plate 103, as illustrated in Fig. 2. The control circuit 109 controls various operations of the robot 1. Details of the control circuit 109 will be described later with reference to Fig. 15.

A first driving wheel 110 and a second driving wheel 111 are attached to the lower surface of the second rotational plate 104 and are in contact with the inner circumferential surface of the housing 101. The first driving wheel 110 has a first motor 112 that drives the first driving wheel 110. Similarly, the second driving wheel 111 has a second motor 113 that drives the second driving wheel 111. That is, each of the first driving wheel 110 and second driving wheel 111 is driven by an individually independent motor. Details of the operation of the robot 1 due to the driving of the first driving wheel 110 and second driving wheel 111 will be described later. The first driving wheel 110 and second driving wheel 111 constitute a set of driving wheels.

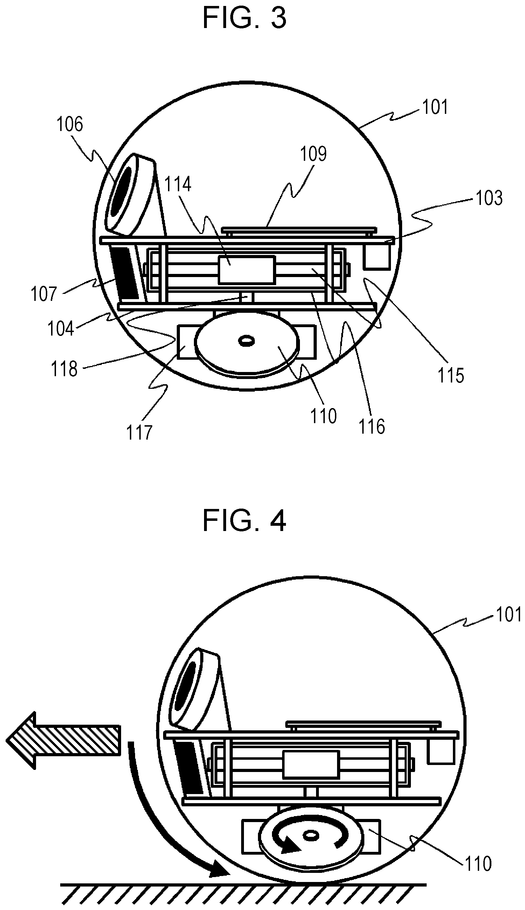

Fig. 3 is an internal side view of the robot 1 according to the first embodiment of the present disclosure, as viewed from arrow A in Fig. 2. In Fig. 3, a counterweight (weight) 114 is provided between the first rotational plate 103 and the second rotational plate 104. The counterweight (weight) 114 is positioned slightly below the center of the housing 101. Therefore, the center of gravity of the robot 1 is positioned below the center of the housing 101. Thus, it is possible to stabilize the operation of the robot 1.

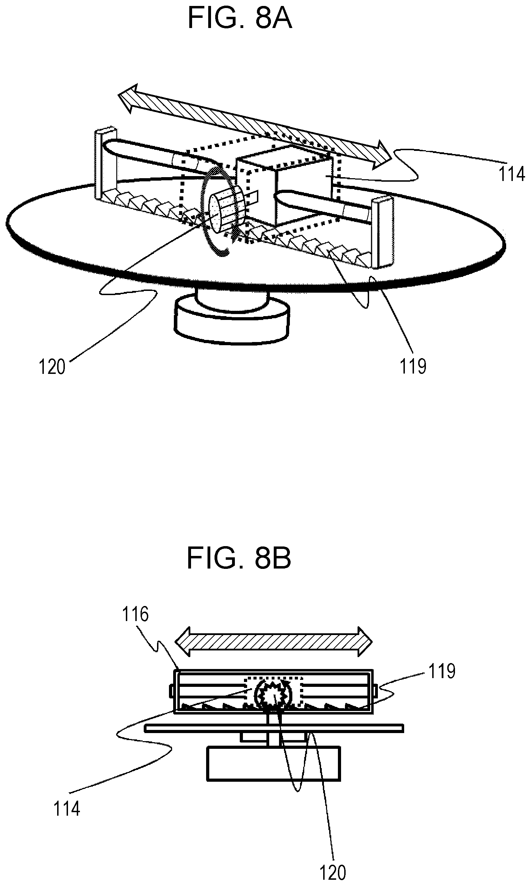

As illustrated in Fig. 3, the robot 1 has, as a mechanism that drives the counterweight (weight) 114, a guide shaft 115 that restricts a direction in which the counterweight (weight) 114 moves, a swing arm 116 that restricts a position in a direction in which the counterweight (weight) 114 rotates, a rotation motor 117 that rotates the swing arm 116, a rotational shaft 118 that mutually connects the swing arm 116 and rotation motor 117, a belt 119 (Figs. 8A and 8B) used to drive the counterweight (weight) 114, a motor pulley 120 (Figs. 8A and 8B) in contact with the belt 119, and a driving motor (not illustrated) that rotates the motor pulley 120. In this aspect, the driving motor is incorporated into the counterweight (weight) 114. Details of the operation of the robot 1, the operation being driven by the counterweight (weight) 114, will be described later.

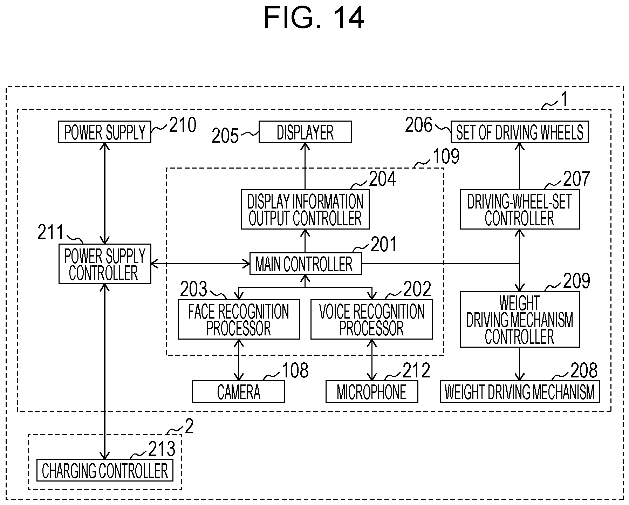

Although not illustrated in Figs. 2 and 3, the robot 1 further has a power supply 210 (Fig. 14) and a microphone 212 (Fig. 14). The robot 1 is charged by a battery charger 2 (Fig. 14). The power supply 210 manages electric power stored under control of a power controller 211 (Fig. 14) in the robot 1 and a charging controller 213 (Fig. 14) in the battery charger 2. The microphone 212 acquires voices in an environment around the robot 1.

Next, the operation of the robot 1 using the first driving wheel 110 and second driving wheel 111 will be described with reference to Figs. 4 to 6.

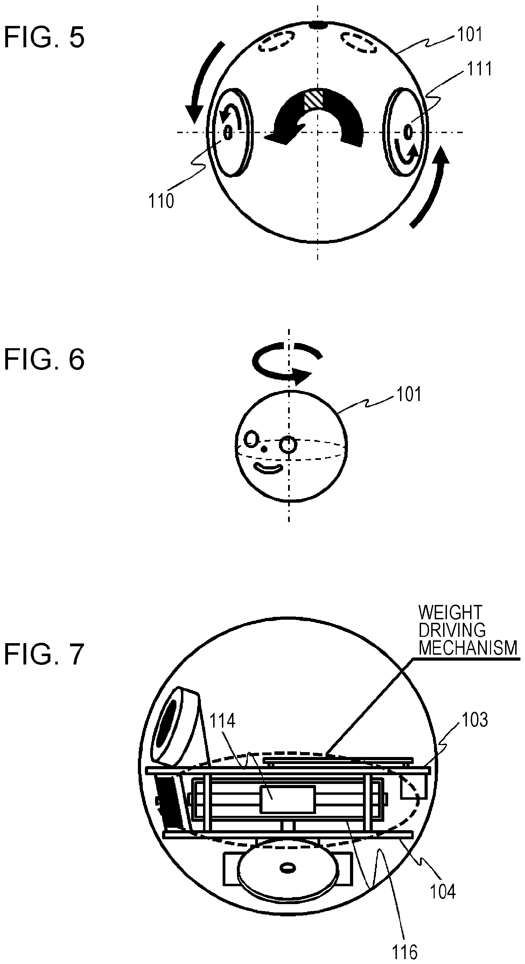

Fig. 4 is a side view of the robot 1 according to the first embodiment of the present disclosure, as viewed from arrow A in Fig. 2, representing a straight-ahead operation. Fig. 5 is a plan view representing the rotational operation of the robot 1 according to the first embodiment of the present disclosure, as viewed from arrow B in Fig. 2. Fig. 6 is a perspective view representing the rotational operation of the robot 1 according to the first embodiment of the present disclosure.

As illustrated in Fig. 4, when the first driving wheel 110 and second driving wheel 111 are rotated in the forward direction, their power rotates the housing 101 in the forward direction. Thus, the robot 1 moves ahead. Conversely, when the first driving wheel 110 and second driving wheel 111 are rotated in the backward direction, the robot 1 backs up.

As illustrated in Figs. 5 and 6, when the first driving wheel 110 and second driving wheel 111 are rotated in mutually opposite directions, their power rotates the housing 101 around a vertical axis that passes the center of the housing 101. That is, the robot 1 rotates leftward or rightward at that place. The robot 1 moves through this type of forward, backward, or rotational operation.

Next, the basic operation of the robot 1 using the counterweight (weight) 114 will be described with reference to Figs. 7 to 9C.

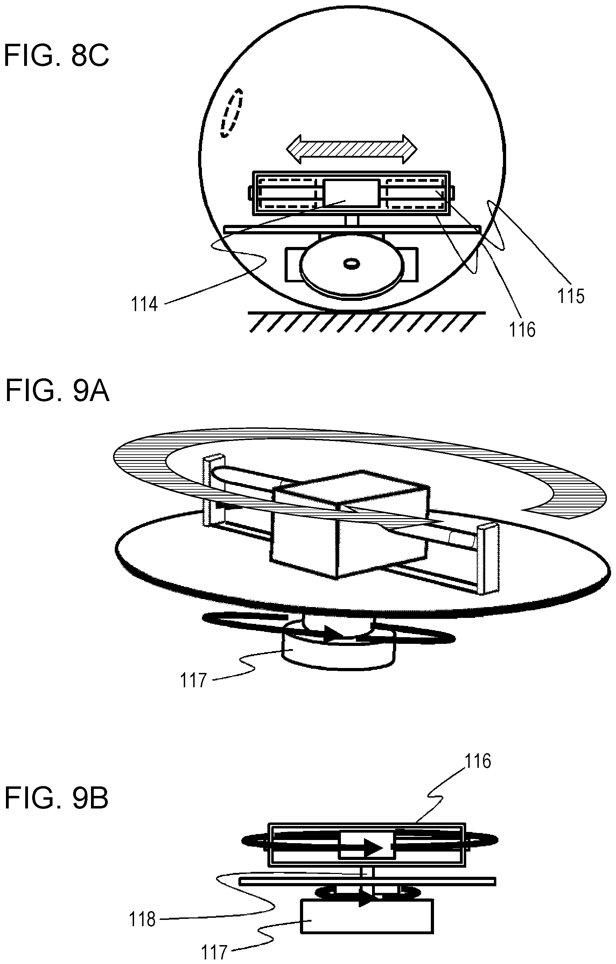

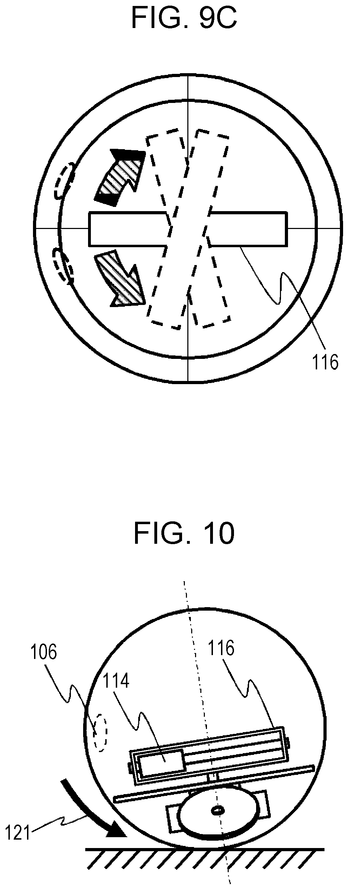

Fig. 7 is a drawing indicating a driving mechanism for the counterweight (weight) 114 in the side view in Fig. 3. Fig. 8A is a perspective view illustrating the operation of the driving mechanism for the counterweight (weight) when the counterweight (weight) is to be driven in a predetermined linear direction. Fig. 8B is a side view illustrating the operation of the driving mechanism for the counterweight (weight) when the counterweight (weight) is to be driven in the predetermined linear direction. Fig. 8C is a side view illustrating a state in which the counterweight (weight) 114 reciprocates in the predetermined linear direction in the side view in Fig. 3. Fig. 9A is a perspective view illustrating the operation of the driving mechanism for the counterweight (weight) when the swing arm is to be rotated. Fig. 9B is a side view illustrating the operation of the driving mechanism for the counterweight (weight) when the swing arm is to be rotated. Fig. 9C is a plan view illustrating a state in which the swing arm 116 of the robot 1 according to the first embodiment of the present disclosure rotates, as viewed from arrow B in Fig. 2.

As illustrated in Fig. 7, the central position of the swing arm 116, for example, is the default position of the counterweight (weight) 114. When the counterweight (weight) 114 is positioned at the center of the swing arm 116, the first rotational plate 103 and second rotational plate 104 are substantially parallel to a traveling surface, and the eyes, nose, and mouth, which constitute the face of the robot 1, for example, are placed in a state in which they are oriented in a default direction.

As illustrated in Figs. 8A and 8B, a weight driving motor (not illustrated) incorporated into the counterweight (weight) 114 rotates the motor pulley 120 linked to the weight driving motor. When the rotated motor pulley 120 turns on the belt 119, the counterweight (weight) 114 moves in the swing arm 116. When the rotational direction of the motor pulley 120, that is, the driving direction of the weight driving motor is changed, the counterweight (weight) 114 reciprocates in a linear direction in the swing arm 116.

As illustrated in Fig. 8C, the counterweight (weight) 114 reciprocates in the linear direction in the swing arm 116 along the guide shaft 115.

As illustrated in Figs. 9A and 9B, the rotation motor 117 rotates the rotational shaft 118 and thereby rotates the swing arm 116 connected to the rotational shaft 118 (Fig. 3).

As illustrated in Fig. 9C, it is possible to rotate the swing arm 116 in both the clockwise direction and the counterclockwise direction.

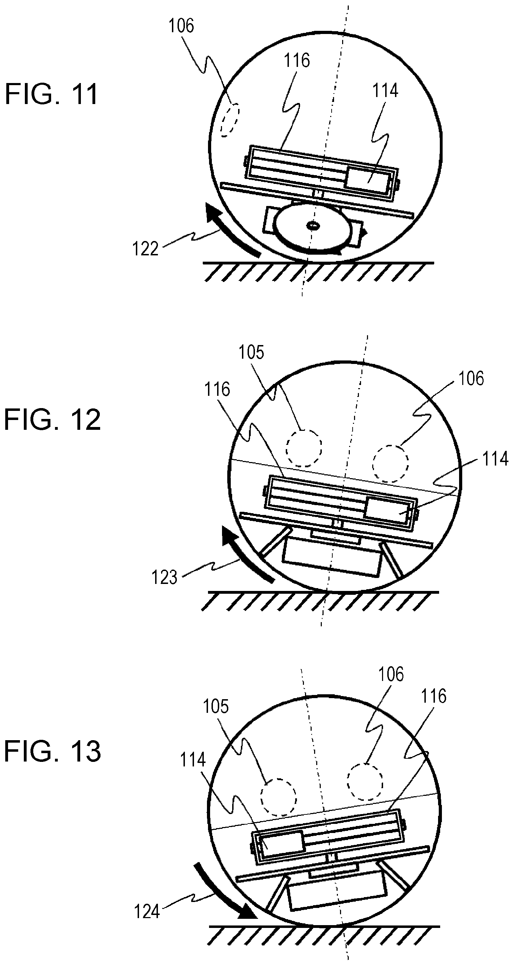

Furthermore, details of the operation of the robot 1 using the counterweight (weight) 114 will be described with reference to Figs. 10 to 13. Fig. 10 is a side view illustrating the attitude of the robot 1 when the counterweight (weight) 114 is positioned so as to be brought close to the front side, as viewed from arrow A in Fig. 2. Fig. 11 is a side view illustrating the attitude of the robot 1 when the counterweight (weight) 114 is positioned so as to be brought close to the back side, as viewed from arrow A in Fig. 2. Fig. 12 is a front view illustrating the attitude of the robot 1 when the counterweight (weight) 114 is positioned so as to be brought close to the right side, as viewed from arrow C in Fig. 2. Fig. 13 is a front view illustrating the attitude of the robot 1 when the counterweight (weight) 114 is positioned so as to be brought close to the left side, as viewed from arrow C in Fig. 2.

As illustrated in Fig. 10, when the counterweight (weight) 114 is moved from the default position toward one end (left end in Fig. 10) of the swing arm 116, that is, moved toward the front, in the state in which the swing arm 116 is perpendicular to the front of the robot 1, the robot 1 tilts forward as indicated by an arrow 121. Alternatively, as illustrated in Fig. 11, when the counterweight (weight) 114 is moved from the default position toward another end (right end in Fig. 11) of the swing arm 116, that is, moved toward the back, in a state in which the swing arm 116 is perpendicular to the front of the robot 1, the robot 1 tilts backward as indicated by an arrow 122. Therefore, when the counterweight (weight) 114 is moved from the one end in the swing arm 116 to the other end in the state in which the swing arm 116 is perpendicular to the front of the robot 1, the robot 1 performs a reciprocating operation in which the robot 1 tilts in the forward direction indicated by the arrow 121 or the backward direction indicated by the arrow 122. That is, the robot 1 rotates in the up-and-down direction through a predetermined angle.

As described above, the first displayer 105, second displayer 106, and third displayer 107 represent part of the face of the robot 1, such as, for example, eyes and a mouse. Therefore, when the counterweight (weight) 114 is used to cause the robot 1 to perform a reciprocating operation in which the robot 1 tilts forward or backward, a state in which, for example, the robot 1 is running out of breath or is sleepy can be represented. If this control is performed when, for example, the amount of remaining electric power in the power supply 210 falls to or below a predetermined value, it is possible to inform the user, without making the user feel uncomfortable, that the amount of remaining electric power in the power supply 210 has been lessened, without displaying information about the amount of remaining electric power, which is irrelevant to the face, in the first displayer 105, second displayer 106, and third displayer 107.

As illustrated in Fig. 12, when the counterweight (weight) 114 is moved from the default position toward one end (right end in Fig. 12) of the swing arm 116, that is, moved rightward, in the state in which the swing arm 116 is parallel to the front of the robot 1, the robot 1 tilts toward the right side indicated by an arrow 123. Alternatively, as illustrated in Fig. 13, when the counterweight (weight) 114 is moved from the default position toward another end (left end in Fig. 13) of the swing arm 116, that is, moved leftward, in the state in which the swing arm 116 is parallel to the front of the robot 1, the robot 1 tilts toward the left side indicated by an arrow 124. Therefore, when the counterweight (weight) 114 is moved from the one end in the swing arm 116 to the other end in the state in which the swing arm 116 is parallel to the front of the robot 1, the robot 1 performs a reciprocating operation in which the robot 1 tilts toward the right side direction indicated by the arrow 123 or the left side indicated by the arrow 124. That is, the robot 1 rotates rightward and leftward through a predetermined angle.

As described above, the first displayer 105, second displayer 106, and third displayer 107 represent part of the face of the robot 1, such as, for example, eyes and a mouse. Therefore, by using the counterweight (weight) 114 to make the robot 1 perform a reciprocating motion in which the robot 1 tilts to the right or left, it is possible to represent a state in which the robot 1 is in a good humor or to represent that the robot 1 is considering.

Next, details of the internal circuit of the robot 1 according to the first embodiment of the present disclosure will be described with reference to Fig. 14. Fig. 14 is a block diagram illustrating the robot 1 according to the first embodiment of the present disclosure and the battery charger 2 used to charge the robot 1.

As illustrated in Fig. 14, the robot 1 has the control circuit 109, a displayer 205, a set of driving wheels 206, a driving-wheel-set controller 207, a weight driving mechanism 208, a weight driving mechanism controller 209, the power supply 210, a power supply controller 211, the camera 108, and the microphone 212. The battery charger 2 includes the charging controller 213.

The control circuit 109 has a main controller 201, a voice recognition processor 202, a face recognition processor 203, and a display information output controller 204.

The main controller 201 acquires a recognition result for a voice of the user from the voice recognition processor 202. The main controller 201 acquires a recognition result for the face of the user from the face recognition processor 203. The main controller 201 acquires a charging-in-progress flag for the electric power state of the power supply 210 and a remaining amount from the power supply controller 211.

The main controller 201 creates commands from information acquired from the voice recognition processor 202, face recognition processor 203, or power supply controller 211, and then transmits various commands to the display information output controller 204, driving-wheel-set controller 207, or weight driving mechanism controller 209. Details of these commands will be described later.

The voice recognition processor 202 recognizes the presence or absence of a voice of the user from a voice acquired by the microphone 212, and manages a voice recognition result.

The face recognition processor 203 recognizes the presence or absence of the face of the user as well as the position and size of the face from an image acquired by the camera 108, and manages a face recognition result.

The display information output controller 204 displays display information about the expression of the robot 1 on the displayer 205, the expression corresponding to a command transmitted from the main controller 201. The displayer 205 is constituted by the first displayer 105, second displayer 106, and third displayer 107, which have been described with reference to Fig. 2.

The driving-wheel-set controller 207 operates the set of driving wheels 206 of the robot 1 in response to a command transmitted from the main controller 201. The set of driving wheels 206 is constituted by the first driving wheel 110 and second driving wheel 111, which have been described with reference to Fig. 2.

The weight driving mechanism controller 209 operates the weight driving mechanism 208 of the robot 1 in response to a command transmitted from the main controller 201. The weight driving mechanism 208 is constituted by the guide shaft 115, swing arm 116, rotation motor 117, rotational shaft 118, belt 119, and motor pulley 120, which have been described with reference to Figs. 3, 8A and 8B, as well as the weight driving motor (not illustrated).

The power supply controller 211 manages the charging-in-progress flag, which represents whether the electric power state of the robot 1 is a charging-in-progress state, and the amount of remaining electric power. The power supply controller 211 outputs, to the main controller 201, the charging-in-progress flag and information about the amount of remaining electric power. Furthermore, if the robot 1 is connected to the battery charger 2, the power supply controller 211 stores electric power in the power supply 210 of the robot 1 together with the charging controller 213 of the battery charger 2. When the amount of remaining electric power in the power supply 210 is equal to or smaller than a predetermined value, the main controller 201 performs remaining power amount notification processing, which will be described next.

Next, remaining power amount notification processing in the robot 1 according to the first embodiment of the present disclosure will be described with reference to Fig. 15. Fig. 15 is a flowchart illustrating remaining power amount notification processing in the robot 1 according to the first embodiment of the present disclosure. Here, when the amount of remaining electric power in the power supply 210 in the robot 1 falls to or below a predetermined value, processing is performed in which the robot 1 makes a switchover to rotation in the up-and-down direction to represent a state in which the robot 1 is running out of breath or is sleepy.

First, the power supply controller 211 periodically monitors the amount of remaining electric power in the power supply 210. The main controller 201 accepts information about the amount of remaining electric power from the power supply controller 211 and decides whether the amount of remaining electric power in the power supply 210 is, for example, 30% or less (S1501). If the amount of remaining electric power in the power supply 210 is not 30% or less (in the case of No in S1501), remaining power amount notification processing is terminated. This is because the state is such that the amount of remaining electric power in the power supply 210 is not yet small and it is unnecessary to notify the user of the amount of remaining electric power in the power supply 210.

Next, if the amount of remaining electric power in the power supply 210 is, for example, 30% or less (in the case of Yes in S1501), loop processing from S1502 to S1506, that is, remaining power amount notification processing, is repeated until the amount of remaining electric power in the power supply 210 becomes 0. Here, remaining power amount notification processing refers to processing in which the robot 1 makes a switchover to rotation in the up-and-down direction to represent a state in which the robot 1 is running out of breath or is sleepy. This processing is performed to avoid the user from becoming unable to determine, when the robot 1 has become unable to operate due to a small amount of remaining electric power in the power supply 210, whether the robot 1 has become unable to operate because it has run out of battery or has failed. Although the predetermined value in a case in which the amount of remaining electric power in the power supply 210 is equal to or smaller than the predetermined value has been taken as, for example, 30% as an example, this is not a limitation.

In remaining power amount notification processing, the main controller 201 decides whether the electric power state of the robot 1 is the charging-in-progress state according to whether the charging-in-progress flag entered from the power supply controller 211 is ON or OFF (S1502).

If the charging-in-progress flag for the electric power state of the robot 1 is not OFF (in the case of No in S1502), that is, the charging-in-progress flag is ON, remaining power amount notification processing is terminated. Since, in the aspect in this embodiment, the robot 1 is being charged, the user is not notified of the amount of remaining electric power in the power supply 210.

If the charging-in-progress flag for the electric power state of the robot 1 is OFF (in the case of Yes in S1502), it is decided whether the robot 1 recognizes the face of the user, a voice of the user, or both (S1503). This is because the charged situation of the robot 1 is just information that becomes meaningful only when the user is notified of the charged situation. Even if a state in which the robot 1 is running out of breath or is sleepy is represented in a case in which the user is not present around the robot 1, if the user that confirms the representation is not present around the robot 1, remaining electric power is wastefully consumed in a situation in which the amount of remaining electric power is small. In this aspect, therefore, it is confirmed that the user is present around the robot 1 before the user is notified of the charged situation of the robot 1. Thus, it can be prevented that when the amount of remaining electric power in the power supply 210 is, for example, 30% or less, a state in which the robot 1 is running out of breath or is sleepy is represented in spite of the absence of the user to be notified around the robot 1, and electric power is thereby wastefully consumed.

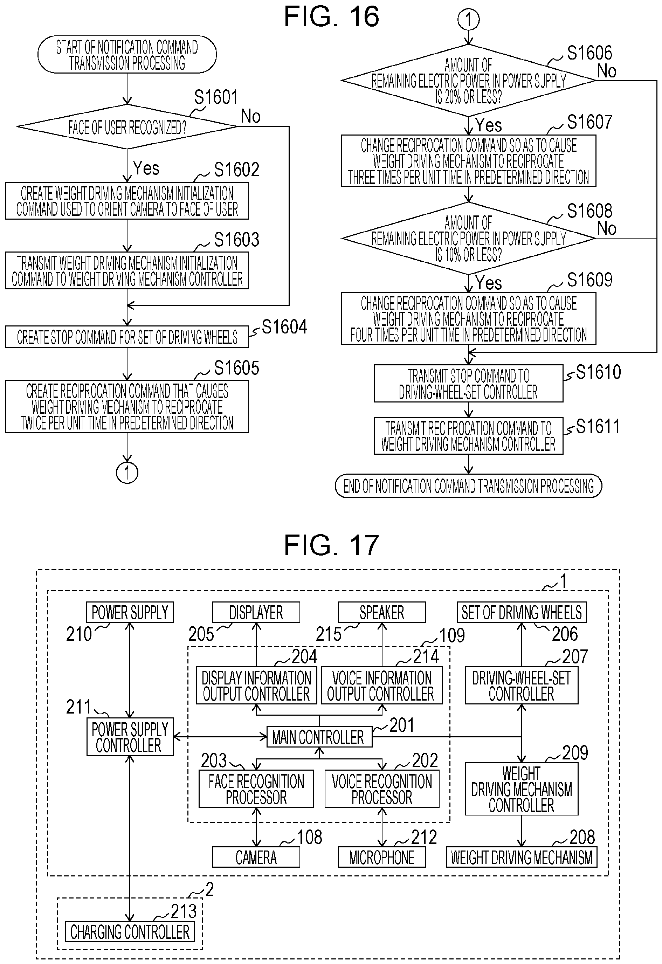

Here, if the robot 1 does not recognize the face of the user, a voice of the user, or either of them (in the case of No in S1503), the main controller 201 decides whether the robot 1 is operating, according to the notification command that main controller 201 has output to the driving-wheel-set controller 207 or weight driving mechanism controller 209 (S1505). This is because when the user is not present around the robot 1, if the robot 1 is rotating in the up-and-down direction in a reciprocating manner within a predetermined range of operating angles, the small amount of remaining electric power in the power supply 210 is even more lessened, so the operation of the robot 1 is stopped to prevent electric power from being wastefully consumed. Incidentally, the notification command will be described later in the description of Fig. 16.

If it is decided according to the notification command transmitted from the main controller 201 that the robot 1 is not operating (in the case of No in S1505), the robot 1 has been already stopped, so no particular processing is performed. After that, remaining power amount notification processing from S1502 to S1506 is repeated at intervals of a predetermined time.

By contrast, if it is decided according to the notification command that the main controller 201 has transmitted to the driving-wheel-set controller 207 or weight driving mechanism controller 209 that the robot 1 is operating (in the case of Yes in S1505), the main controller 201 creates a stop command for the weight driving mechanism 208 and outputs the stop command to the weight driving mechanism controller 209 (S1506). A possible situation for this is that, for example, the user was present around the robot 1 at first and the robot 1 appealed to the user to indicate that the amount of remaining electric power in the power supply 210 had been lessened, after which the user has moved apart from the vicinity of the robot 1 while remaining power amount notification processing was being repeated at intervals of a predetermined time.

Due to S1506, the robot 1 stops its operation. Thus, it can be prevented that when the amount of remaining electric power in the power supply 210 is 30% or less, in spite of the absence of the user to be notified around the robot 1, the robot 1 rotates in the up-and-down direction in a reciprocating manner within a predetermined range of operating angles and electric power is thereby wastefully consumed.

After S1506, remaining power amount notification processing from S1502 to S1506 is repeated at intervals of a predetermined time.

If, in S1503, the robot 1 recognizes the face of the user, a voice of the user, or both (in the case of Yes), the main controller 201 performs notification command transmission processing (S1504). Details of notification command transmission processing in S1504 will be described later with reference to Fig. 16.

Due to notification command transmission processing in S1504, the robot 1 rotates in the up-and-down direction in a reciprocating manner within a predetermined range of operating angles. That is, the robot 1 represents a state in which it is running out of breath or is sleepy. In this case, the displayer 205 displays part of the face of the robot 1, such as, for example, eyes or a mouth. Therefore, without displaying the amount of remaining electric power in the power supply 210 on the surface of the robot 1 like a spherical body or in spite of the robot 1 like a spherical body, for example, without hands and legs, it is possible to show the user the state of the power supply 210 by using the rotational operation of the spherical body.

After S1504, remaining power amount notification processing from S1502 to S1506 is repeated at intervals of a predetermined time.

Next, notification command transmission processing in S1504 in Fig. 15 will be described in detail with reference to Fig. 16. Fig. 16 is a flowchart illustrating notification command transmission processing in the robot 1 according to the first embodiment of the present disclosure.

As described later, in notification command transmission processing, it is decided whether the amount of remaining electric power in the power supply 210 is, for example, 30% or less, 20% or less, or 10% or less, and the number of times reciprocating rotation is performed in the up-and-down direction is increased according to the result of this decision. Thus, as the amount of remaining electric power in the power supply 210 is lessened, the robot 1 represents a state in which it more heavily runs out of breath or is even sleepier.

First, the main controller 201 accepts a recognition result for the face of the user from the face recognition processor 203 and checks whether the main controller 201 can recognize the face of the user (S1601).

Next, if the main controller 201 can recognize the face of the user (in the case of Yes in S1601), the main controller 201 creates an initialization command that initializes the weight driving mechanism 208 so as to orient the camera 108 to the face of the user (S1602). The main controller 201 then transmits the initialization command to the weight driving mechanism controller 209 (S1603).

Then, the weight driving mechanism controller 209 drives the weight driving mechanism 208 in response to the initialization command. That is, the robot 1 operates so as to orient the camera 108 to the face of the camera 108 and stops in a state in which the face of the robot 1 is oriented to the user. Here, in this aspect, the camera 108, for example, forms the nose of the robot 1. Due to this, the robot 1 reciprocates in the up-and-down direction with the face of the robot 1 being oriented to the user, representing an operation that appeals to the user to indicate a state in which the robot 1 is running out of breath or is sleepy.

Incidentally, although, in S1602, the initialization command has been created for the weight driving mechanism 208 to orient the camera 108 to the face of the user, this is not a limitation. An initialization command to orient the camera 108 to a position below the face of the user may be created.

In this case, the robot 1 stops in a state in which when the user sees the robot 1, it appears to face downward, representing a state in which the robot 1 is running out of breath or is sleepy. Thus, the robot 1 shows the user a state in which robot 1 faces downward and is more tired.

By contrast, if the main controller 201 cannot recognize the face of the user in S1601 (in the case of No), the main controller 201 does not recognize that an image captured by the camera 108 is the face of the user and recognizes that a voice collected by the microphone 212 is a voice of the user (Yes in S1503 in Fig. 15). Thus, it is decided that the user is present around the robot 1. An example is a case in which the user is present behind the robot 1. In this case, the robot 1 does not need to perform processing to orient the face of the robot 1 to the user, so the robot 1 reciprocates in the up-and-down direction with a predetermined range of operating angles, without performing processing in S1602 to S1603 described above.

After a No decision is made after S1603 or in S1601, the main controller 201 creates a stop command for the set of driving wheels 206 (S1604). Thus, in an aspect in this embodiment, the robot 1 is stopped before it is made to reciprocate in the up-and-down direction. This is because when the robot 1 is made to reciprocate in the up-and-down direction in a state in which the robot 1 is stopping, it can be thought that the robot 1 more appears to run out of breath or be sleepy.

The main controller 201 creates a reciprocation command that causes the weight driving mechanism 208 to reciprocate, for example, twice per unit time in a predetermined direction (S1605). This is to make a distinction between a case in which a state in which the robot 1 is running out of breath or is sleepy is represented and a case in which the robot 1 nods in response to an inquiry from the user, just by causing the displayer 205 to reciprocate in the up-and-down direction. Specifically, when the robot 1 operates to nod in response to an inquiry from the user, an operation in which the robot 1 swings the face once in the up-and-down direction is typical. In view of this, in this aspect, as an operation to inform the user that the amount of remaining electric power in the power supply 210 has been lessened, it was determined to cause the counterweight (weight) 114 to reciprocate in a predetermined direction in a period during which the displayer 205 reciprocates twice or more in the up-and-down direction.

Therefore, a distinction can be easily made between a case in which a state in which the robot 1 is running out of breath or is sleepy is represented and a case in which the robot 1 nods in response to an inquiry from the user, just by making the displayer 205 to reciprocate in the up-and-down direction. As a result, it is possible to reliably inform the user that the amount of remaining electric power in the power supply 210 has been lessened.

Next, the main controller 201 accepts information about the amount of remaining electric power from the power supply controller 211, and decides whether the amount of remaining electric power in the power supply 210 is, for example, 20% or less (S1606).

In S1501 in Fig. 15, it has been decided whether the amount of remaining electric power in the power supply 210 is, for example, 30% or less as a condition to enter remaining power amount notification processing. Once the main controller 201 has entered remaining power amount notification processing, the robot 1 continues an operation to reciprocate in the up-and-down direction. During a time as well while the robot 1 continues an operation to reciprocate in the up-and-down direction, the amount of remaining electric power in the power supply 210 is reduced. In view of this, in this aspect, to have the robot 1 more largely represent a state in which it is running out of breath or sleepy as the amount of remaining electric power in the power supply 210 is lessened, a degree to which the amount of remaining electric power in the power supply 210 is reduced is decided anew. Incidentally, although 20% has been described here as an example, this is not a limitation.

Here, a case will be assumed in which remaining power amount notification processing has been started immediately after the amount of remaining electric power in the power supply 210 dropped below 30%. In this assumption, the amount of remaining electric power in the power supply 210 is more than 20% and equal to or less than 30%, so a No decision is made in S1606.

In this case, the main controller 201 then transmits the stop command created in S1604 to the driving-wheel-set controller 207 (S1610).

Then, the main controller 201 transmits the reciprocation command created in S1605 to the weight driving mechanism controller 209 (S1611). This terminates the notification command transmission processing.

Incidentally, the operation, based on the reciprocation command created in S1605, of the robot 1 may be practiced before the operation, based on the stop command created in S1604, of the robot 1 is performed. That is, even in a case in which the robot 1 has been made to reciprocate in the up-and-down direction before a state in which the robot 1 stops is entered, the robot 1 may be stopped after that and, as a result, the robot 1 may be made to reciprocate in the up-and-down direction in the stopped state. After that, remaining power amount notification processing from S1502 to S1506 in Fig. 15 is repeated at intervals of a predetermined time.

The stop command created in S1604 and the reciprocation command created in S1605 correspond to the notification command in S1505 in Fig. 15.

The above is the description of notification command transmission processing in a case in which the amount of remaining electric power in the power supply 210 is more than 20% and equal to or less than 30%.

Next, a case will be described with reference to Fig. 16 in which remaining power amount notification processing in S1502 to S1506 in Fig. 15 was repeated at intervals of a predetermined time, the amount of remaining electric power in the power supply 210 was thereby further reduced, and the amount of remaining electric power in the power supply 210 became more than 10% and equal to or less than 20%.

In this case as well, processing in S1601 to S1605 is the same as in the above case in which the amount of remaining electric power in the power supply 210 is more than 20% and equal to or less than 30%.

Since, in S1606, the amount of remaining electric power in the power supply 210 is 20% or less unlike the above case, a Yes decision is made.

In this case, the main controller 201 then changes the command created in S1605, that is, the reciprocation command that causes the weight driving mechanism 208 to reciprocate twice per unit time in a predetermined direction, to a reciprocation command that causes the weight driving mechanism 208 to reciprocate, for example, three times (S1607). Incidentally, although 3 has been described here as an example of the number of reciprocations to which the reciprocation command is changed, this is not a limitation.

Following S1607, the main controller 201 accepts information about the amount of remaining electric power from the power supply controller 211, and decides whether the amount of remaining electric power in the power supply 210 is, for example, 10% or less (S1608).

As described above, the amount of remaining electric power in the power supply 210 is assumed to be more than 10% and equal to or less than 20%, a No decision is made in S1608.

Next, as in the case in which the amount of remaining electric power in the power supply 210 is more than 20% and equal to or less than 30%, processing to transmit the stop command to the driving-wheel-set controller 207 (S1610) and processing to transmit the reciprocation command to the weight driving mechanism controller 209 (S1611) are performed. This completes notification command transmission processing.

The above is the description of notification command transmission processing in a case in which the amount of remaining electric power in the power supply 210 is more than 10% and equal to or less than 20%.

Next, a case will be described with reference to Fig. 16 in which remaining power amount notification processing in S1502 to S1506 in Fig. 15 was repeated at intervals of a predetermined time, the amount of remaining electric power in the power supply 210 was thereby even more reduced, and the amount of remaining electric power in the power supply 210 became more than 0% and equal to or less than 10%.

In this case as well, processing in S1601 to S1607 is the same as in the above case in which the amount of remaining electric power in the power supply 210 is more than 10% and equal to or less than 20%.

Since, in S1608, the amount of remaining electric power in the power supply 210 is 10% or less unlike the above case, a Yes decision is made.

In this case, the main controller 201 then changes the command created in S1607, that is, the reciprocation command that causes the weight driving mechanism 208 to reciprocate three times per unit time in a predetermined direction, to a reciprocation command that causes the weight driving mechanism 208 to reciprocate, for example, four times (S1609). Incidentally, although 4 has been described here as an example of the number of reciprocations to which the reciprocation command is changed, this is not a limitation.

Next, as in the case in which the amount of remaining electric power in the power supply 210 is more than 10% and equal to or less than 20%, processing to transmit the stop command to the driving-wheel-set controller 207 (S1610) and processing to transmit the reciprocation command to the weight driving mechanism controller 209 (S1611) are performed. This completes notification command transmission processing.

The above is the description of notification command transmission processing in a case in which the amount of remaining electric power in the power supply 210 is more than 0% and equal to or less than 10%.

As described above, in this aspect, as the amount of remaining electric power in the power supply 210 is lessened, the number of times the counterweight (weight) 114 is made to reciprocate in a predetermined direction per unit time is increased (S1605, S1607, and S1609). This causes the robot 1 to more heavily represent a state in which it is running out breath or is sleepy step by step as the amount of remaining electric power in the power supply 210 is lessened. Incidentally, although three steps have been described here as examples of the number of steps in the amount of remaining electric power according to which the notification command is determined (a case of more than 20% and equal to or less than 30%, a case of more than 10% and equal to or less than 20%, and a case of more than 0% and equal to or less than 10%), the number of steps is not limited to 3.

As described above, if the number of times the counterweight (weight) 114 is made to reciprocate in a predetermined direction per unit time is increased as the amount of remaining electric power in the power supply 210 is lessened, the amount of power consumption of the power supply 210 is increased.

In this aspect, however, although the amount of remaining electric power in the power supply 210 is sacrificed, the user is more strongly informed that the amount of remaining electric power in the power supply 210 has been lessened by heavily representing a state in which the robot 1 is running out of breath or is sleepy.

Incidentally, as described above, in this aspect, as the amount of remaining electric power in the power supply 210 is lessened, the number of times the counterweight (weight) 114 is made to reciprocate in a predetermined direction per unit time is increased (S1605, S1607, and S1609), in this aspect. In stead of this, as the amount of remaining electric power in the power supply 210 is lessened, the amount of movement in which the counterweight (weight) 114 is made to reciprocate in a predetermined direction may be increased.

Even in this case, as the amount of remaining electric power in the power supply 210 is lessened, a state in which the robot 1 becomes sleepier is represented.

As described above, according to this aspect, without displaying the amount of remaining electric power in the power supply 210 on the surface of the robot 1 like a spherical body or in spite of the robot 1 like a spherical body, for example, without hands and legs, it is possible to appeal to the user to indicate that the amount of remaining electric power in the power supply 210 has been lessened.

### (Second embodiment)

Next, a second embodiment will be described with reference to Fig. 17. Fig. 17 is a block diagram illustrating a robot 1 according to the second embodiment of the present disclosure and a battery charger 2 used to charge the robot 1. Incidentally, in Fig. 17, constituent elements that are the same as in Fig. 14 are given the same reference numerals and descriptions will be omitted.

In the second embodiment, the robot 1 further has a voice information output controller 214 and a speaker 215, unlike the first embodiment. In Fig. 17, the voice information output controller 214 outputs, to the speaker 215, voice information indicating that the amount of remaining electric power in the power supply 210 is small, in response to a command output from the main controller 201. Then, the speaker 215 outputs the voice information of the robot 1.

In this aspect, if the amount of remaining electric power in the power supply 210 is equal to or smaller than a predetermined value in a state in which electric power has not been charged by the battery charger 2, the main controller 201 outputs voice information through the speaker 215, the voice information informing the user that the amount of remaining electric power in the power supply 210 is small.

In addition, in this aspect, if the amount of remaining electric power in the power supply 210 is equal to or smaller than a predetermined value in a state in which electric power has not been charged by the battery charger 2, the main controller 201 can use the displayer 205 to cause it to display display information about an expression representing that the amount of remaining electric power in the power supply 210 is small.

Thus, in this aspect, if the amount of remaining electric power in the power supply 210 is equal to or smaller than a predetermined value in a state in which electric power has not been charged by the battery charger 2, the robot 1 not only represents a state in which it is running out breath or is sleepy, but also informs the user of the amount of remaining electric power in the power supply 210 by using the voice information and display information. Thus, the user can even more easily grasp the amount of remaining electric power in the power supply 210.

### (Overview of the embodiments of the present disclosure)

A robot in one aspect of the present disclosure includes:
a housing like a spherical body;
a frame disposed in the interior of the housing;
a displayer attached to the frame, the displayer displaying at least part of the face of the robot;
a set of driving wheels attached to the frame, the set of driving wheels being in contact with the inner circumferential surface of the housing to rotate the housing;
a weight driving mechanism attached to the frame, the weight driving mechanism causing a weight to reciprocate in a predetermined direction;
a power supply that charges electric power from an external battery charger and supplies the electric power to the set of driving wheels and the weight driving mechanism; and
a control circuit that if the amount of remaining electric power in the power supply is equal to or less than a predetermined value in a state in which electric power from the battery charger is not being charged, stops the rotation of the set of driving wheels and reciprocates the weight in the predetermined direction to reciprocate the displayer in the up-and-down direction.

When the amount of remaining electric power in the power supply is equal to or less than the predetermined value, if the robot does not move, the user cannot determine the robot has become unable to operate because it has run out of battery or has failed. In addition, if a display indicating the amount of remaining electric power in the power supply is given to, for example, the surface of the robot like a spherical body, which have neither hands nor legs, a display different from the face and elements is given to the face of the robot, making the display unnatural.

According to one aspect of the present disclosure, when the amount of remaining electric power in the power supply falls to or below a predetermined value in a state in which electric power from the battery charger is not being charged, the displayer is made to reciprocate in the up-and-down direction to represent a state in which the robot is running out of breath or is sleepy. In this case, the displayer displays part of the face of the robot, such as, for example, eyes. Therefore, without displaying the amount of remaining electric power in the power supply on the surface of the robot like a spherical body or in spite of the robot like a spherical body, for example, without hands and legs, it is possible to show the user the state of the power supply by using the rotational operation of the spherical body.

In addition, in the above aspect, for example,
a camera may be attached to the frame, and
if the amount of remaining electric power in the power supply is equal to or less than the predetermined value in a state in which electric power from the battery charger is not being charged, and an image captured by the camera is recognized as part of the user, the control circuit may stop the rotation of the set of driving wheels and may reciprocate the weight in the predetermined direction to reciprocate the camera in the up-and-down direction.

According to the above aspect, when the amount of remaining electric power in the power supply falls to or below a predetermined value in a state in which electric power from the battery charger is not being charged and, in addition, an image captured by the camera is recognized as part of the user, the camera is made to reciprocate in the up-and-down direction to represent a state in which the robot is running out of breath or is sleepy. Incidentally, in this case, the camera forms part of the face of the robot, such as, for example, the nose.

The charged situation of the robot is just information that becomes meaningful only when the user is notified of the charged situation. In this aspect, therefore, it is confirmed that the user is present around the robot before the user is notified of the charged situation of the robot. Thus, it can be prevented that when the amount of remaining electric power in the power supply is equal to or less than the predetermined value, in spite of the absence of the user to be notified around the robot, the camera is made to reciprocate in the up-and-down direction and electric power is thereby wastefully consumed.

In addition, in the above embodiment, the part of the user may be, for example, a face.

If the face of the user can be recognized by the camera, although depending on the resolution of the camera, it can be thought that a distance between the robot and the user is relatively short. According to the above aspect, when the distance between the robot and the user is relatively short, the user is notified of the charged state of the robot by representing a state in which the robot is running out of breath or is sleepy. Therefore, in a situation in which the charged state of the robot is easily recognized, the user is notified of the charged state of the robot. As a result, it is possible to suppress electric power consumed to notify the user of the charged state, and is also possible to increase the probability that the charged state of the robot is recognized by the user.

In addition, in the above aspect, for example,
a camera may be attached to the frame, and
if the amount of remaining electric power in the power supply is equal to or less than the predetermined value in a state in which electric power from the battery charger is not being charged, and an image captured by the camera is recognized as the face of the user, the control circuit may stop the rotation of the set of driving wheels in a state in which the camera is oriented to a target recognized as the face of the user and may reciprocate the weight in the predetermined direction to reciprocate the camera in the up-and-down direction.

According to the above aspect, the camera forms, for example, the nose of the robot. According to this aspect, when the robot stops with the face of the robot being oriented to the user, an operation is represented that appeals to the user to indicate a state in which the robot is running out of breath or is sleepy.

Without displaying the amount of remaining electric power in the power supply on the surface of the robot like a spherical body or in spite of the robot like a spherical body, for example, without hands and legs, it is possible to reliably show, during interaction between the robot and the user, the user that the amount of remaining electric power in the power supply is small.

In addition, in the above aspect, for example,
a camera may be attached to the frame, and
if the amount of remaining electric power in the power supply is equal to or less than the predetermined value in a state in which electric power from the battery charger is not being charged, and an image captured by the camera is recognized as the face of the user, the control circuit may stop the rotation of the set of driving wheels with the camera being oriented to a position below a target recognized as the face of the user and may reciprocate the weight in the predetermined direction to reciprocate the camera in the up-and-down direction.

According to the above aspect, the camera forms, for example, the nose of the robot. According to this aspect, the robot stops in a state in which when the user sees the robot, it appears to face downward, representing a state in which the robot is running out of breath or is sleepy. Thus, the robot shows the user a state in which robot is more tired.

Without displaying the amount of remaining electric power in the power supply on the surface of the robot like a spherical body or in spite of the robot like a spherical body, for example, without hands and legs, it is possible to reliably show, during interaction between the robot and the user, the user that the amount of remaining electric power in the power supply is small.

In addition, in the above aspect, for example,
a camera may be attached to the frame,
a microphone that collects a sound may be provided, and
if the amount of remaining electric power in the power supply is equal to or less than the predetermined value in a state in which electric power from the battery charger is not being charged, an image captured by the camera is recognized as part of the user, and the sound collected by the microphone is recognized as a voice of the user, the control circuit may stop the rotation of the set of driving wheels and may reciprocate the weight in the predetermined direction to reciprocate the camera in the up-and-down direction.

According to the above aspect, when the amount of remaining electric power in the power supply has fallen to or below the predetermined value in a state in which electric power from the battery charger is not being charged and, in addition, an image captured by the camera has been recognized as part of the user and the voice collected by the microphone has been recognized as a voice of the user, the camera is reciprocated in the up-and-down direction to represent a state in which the robot is running out of breath or is sleepy.

The charged situation of the robot is just information that becomes meaningful only when the user is notified of the charged situation. In this aspect, therefore, both an image and a voice are used to confirm that the user is present around the robot before the user is notified of the charged situation of the robot.

Thus, it can be more reliably prevented that when the amount of remaining electric power in the power supply is equal to or less than the predetermined value, in spite of the absence of the user to be notified around the robot, the camera is made to reciprocate in the up-and-down direction and electric power is thereby wastefully consumed.

In addition, in the above aspect, for example,
a camera may be attached to the frame,
a microphone that collects a sound may be provided, and
if the amount of remaining electric power in the power supply is equal to or less than the predetermined value in a state in which electric power from the battery charger is not being charged, an image captured by the camera is not recognized as part of the user, and the sound collected by the microphone is recognized as a voice of the user, the control circuit may stop the rotation of the set of driving wheels and may reciprocate the weight in the predetermined direction to reciprocate the camera in the up-and-down direction.

According to the above aspect, when the amount of remaining electric power in the power supply has fallen to or below the predetermined value in a state in which electric power from the battery charger is not being charged and, in addition, the voice collected by the microphone has been recognized as a voice of the user, the camera is reciprocated in the up-and-down direction to represent a state in which the robot is running out of breath or is sleepy.

There may be a case in which, although the user is present around the user, the camera of the user is not oriented to the user, so the camera cannot recognize the user. Even in this case, a voice of the user may be recognizable.

In this aspect, even if the user cannot be recognized in an image, if the user can be recognized from a voice, the user is determined to be present around the robot and the user is notified of the charged situation of the robot.

Thus, it can be reliably prevented that when the amount of remaining electric power in the power supply is equal to or less than the predetermined value, in spite of the absence of the user to be notified around the robot, the camera is made to reciprocate in the up-and-down direction and electric power is thereby wastefully consumed.

In addition, in the above aspect, for example,
a camera may be attached to the frame,
a microphone that collects a sound may be provided, and
if the amount of remaining electric power in the power supply is equal to or less than the predetermined value in a state in which electric power from the battery charger is not being charged, an image captured by the camera is not recognized as part of the user, and the sound collected by the microphone is not recognized as a voice of the user, the control circuit may stop the rotation of the set of driving wheels and may stop the movement of the weight.

According to the above aspect, if the amount of remaining electric power in the power supply is equal to or less than the predetermined value in a state in which electric power from the battery charger is not being charged, an image captured by the camera is not recognized as part of the user, and the sound collected by the microphone is not recognized as a voice of the user, an operation to represent the charged situation of the robot, such as, for example, an operation to indicate a state in which the robot is running out of breath or is sleepy, is not performed.

The charged situation of the robot is just information that becomes meaningful only when the user is notified of the charged situation. In this aspect, therefore, if it is determined by using both an image and a voice that the user is not present around the robot, a notification of the charged situation of the robot is not submitted to the vicinity.

Thus, it can be more reliably prevented that when the amount of remaining electric power in the power supply is equal to or less than the predetermined value, in spite of the absence of the user to be notified around the robot, electric power is wastefully consumed.

In addition, in the above aspect, for example,
the control circuit may reciprocate the weight in the predetermined direction in a period during which the displayer reciprocates twice or more in the up-and-down direction.

When a state in which the robot is running out of breath or is sleepy is represented just by an operation that causes the displayer to reciprocate in the up-and-down direction, it is sometimes difficult to distinguish from an operation in which the robot nods in response to an inquiry from the user. In this case, it may be difficult to reliably inform the user that the amount of remaining electric power in the power supply has been lessened.

When the robot operates to nod, an operation in which the robot swings the face once in the up-and-down direction is typical.

In view of this, in the above aspect, as an operation to inform the user that the amount of remaining electric power in the power supply has been lessened, it was determined to cause the weight to reciprocate in the predetermined direction in a period during which the displayer reciprocates twice or more in the up-and-down direction.

Therefore, when a state in which the robot is running out of breath or is sleepy is represented just by making the displayer to reciprocate in the up-and-down direction, it is possible to easily distinguish from the operation in which the robot nods in response to an inquiry from the user. As a result, it is possible to reliably inform the user that the amount of remaining electric power in the power supply has been lessened.

In addition, in the above aspect, for example,
the control circuit may increase the number of times the weight is made to reciprocate in the predetermined direction per unit time as the amount of remaining electric power in the power supply is lessened.

According to the above aspect, as the amount of remaining electric power in the power supply is lessened, the number of times the weight is made to reciprocate in the predetermined direction per unit time is increased. This causes the robot to represent a state in which it is more heavily running out breath as the amount of remaining electric power in the power supply is lessened.

By contrast, since the number of times the weight is made to reciprocate in the predetermined direction per unit time is increased as the amount of remaining electric power in the power supply is lessened, the amount of power consumption of the power supply is increased.

In this aspect, however, although the amount of remaining electric power in the power supply is sacrificed, a state in which the robot is more heavily running out of breath is represented to more strongly inform the user that the amount of remaining electric power in the power supply has been lessened.

Therefore, without displaying the amount of remaining electric power in the power supply on the surface of the robot like a spherical body or in spite of the robot like a spherical body, for example, without hands and legs, it is possible to more strongly appeal to the user to indicate that the amount of remaining electric power in the power supply has been lessened.

In addition, in the above aspect, for example,
the control circuit may increase the amount of movement in which the weight is made to reciprocate in the predetermined direction as the amount of remaining electric power in the power supply is lessened.

According to the above aspect, as the amount of remaining electric power in the power supply is lessened, the amount of movement in which the weight is made to reciprocate in the predetermined direction is increased.

By contrast, since the amount of movement in which the weight is made to reciprocate in the predetermined direction is increased as the amount of remaining electric power in the power supply is lessened, the amount of power consumption of the power supply is increased.

In this aspect, however, although the amount of remaining electric power in the power supply is sacrificed, a state in which the robot becomes sleepier is represented to more strongly inform the user that the amount of remaining electric power in the power supply has been lessened.

Therefore, without displaying the amount of remaining electric power in the power supply on the surface of the robot like a spherical body or in spite of the robot like a spherical body, for example, without hands and legs, it is possible to more strongly appeal to the user to indicate that the amount of remaining electric power in the power supply has been lessened.

In addition, in the above aspect, for example,
if the amount of remaining electric power in the power supply is equal to or less than the predetermined value in a state in which electric power from the battery charger is not being charged, the control circuit may first reciprocate the weight in the predetermined direction, after which the control circuit may stop the rotation of the set of driving wheels.

It is not always needed to stop the rotation of the set of driving wheels and reciprocate the weight in the predetermined direction at the same time.

During the movement operation of the operation, processing to reciprocate the weight in the predetermined direction may be started.

In addition, in the above aspect, for example,
the frame may have
a shaft extending in a direction perpendicular to the set of driving wheels,
a first rotating mechanism that rotationally moves the position of the camera around the shaft, and
a second rotating mechanism that rotationally moves the predetermined direction around the shaft, the weight reciprocating in the predetermined direction, and
when the control circuit decides that the power supply has been connected to the external battery charger, the control circuit may make a control to place the position of the camera on an extension line in the predetermined direction in which the weight reciprocates.

Thus, during charging, the camera is placed on an extension line in a direction in which the weight moves.

In addition, in the above aspect, for example,
a speaker may be provided, and
if the amount of remaining electric power in the power supply is equal to or less than the predetermined value in a state in which electric power from the battery charger is not being charged, the control circuit may output, through the speaker, voice information indicating that the amount of remaining electric power in the power supply is small.

In addition, in the above aspect, for example,
if the amount of remaining electric power in the power supply is equal to or less than the predetermined value in a state in which electric power from the battery charger is not being charged, the control circuit may use the displayer to display display information indicating that the amount of remaining electric power in the power supply is small.

In addition, in the above aspect, for example, at least the part of the face of the robot, the part being displayed on the displayer, may be eyes.

In addition, in the above aspect, for example, at least the part of the face of the robot, the part being displayed on the displayer, may be a mouth.

### Industrial Applicability

The robot in an exemplary embodiment of the present disclosure is useful for informing the user of a charged state in the robot in a state in which the robot is not placed on a battery charger.

### Reference Signs List

- 1: robot
- 2: battery charger
- 101: housing
- 102: frame
- 103: first rotational plate
- 104: second rotational plate
- 105: first displayer
- 106: second displayer
- 107: third displayer
- 108: camera
- 109: control circuit
- 110: first driving wheel
- 111: second driving wheel
- 112: first motor
- 113: second motor
- 114: counterweight (weight)
- 201: main controller
- 204: display information output controller
- 205: displayer
- 206: set of driving wheels
- 207: driving-wheel-set controller
- 208: weight driving mechanism
- 209: weight driving mechanism controller
- 210: power supply
- 211: power supply controller
- 212: microphone
- 213: charging controller
- 214: voice information output controller
- 215: speaker

## Claims

1. A robot comprising:
a housing like a spherical body;
a frame disposed in an interior of the housing;
a displayer attached to the frame, the displayer displaying at least part of a face of the robot;
a set of driving wheels attached to the frame, the set of driving wheels being in contact with an inner circumferential surface of the housing to rotate the housing;
a weight driving mechanism attached to the frame, the weight driving mechanism causing a weight to reciprocate in a predetermined direction;
a power supply that charges electric power from an external battery charger and supplies the electric power to the set of driving wheels and the weight driving mechanism; and
a control circuit that if an amount of remaining electric power in the power supply is equal to or less than a predetermined value in a state in which electric power from the battery charger is not being charged, stops a rotation of the set of driving wheels and reciprocates the weight in the predetermined direction to reciprocate the displayer in an up-and-down direction.

2. The robot according to Claim 1, wherein:
a camera is attached to the frame; and
if the amount of remaining electric power in the power supply is equal to or less than the predetermined value in a state in which electric power from the battery charger is not being charged, and an image captured by the camera is recognized as part of a user, the control circuit stops the rotation of the set of driving wheels and reciprocates the weight in the predetermined direction to reciprocate the camera in the up-and-down direction.

3. The robot according to Claim 2, wherein the part of the user is a face.

4. The robot according to Claim 1, wherein:
a camera is attached to the frame; and
if the amount of remaining electric power in the power supply is equal to or less than the predetermined value in a state in which electric power from the battery charger is not being charged, and an image captured by the camera is recognized as a face of a user, the control circuit stops the rotation of the set of driving wheels in a state in which the camera is oriented to a target recognized as the face of the user and reciprocates the weight in the predetermined direction to reciprocate the camera in the up-and-down direction.

5. The robot according to Claim 1, wherein:
a camera is attached to the frame; and
if the amount of remaining electric power in the power supply is equal to or less than the predetermined value in a state in which electric power from the battery charger is not being charged, and an image captured by the camera is recognized as a face of a user, the control circuit stops the rotation of the set of driving wheels with the camera being oriented to a position below a target recognized as the face of the user and reciprocates the weight in the predetermined direction to reciprocate the camera in the up-and-down direction.

6. The robot according to Claim 1, wherein:
a camera is attached to the frame;
a microphone that collects a sound is provided; and
if the amount of remaining electric power in the power supply is equal to or less than the predetermined value in a state in which electric power from the battery charger is not being charged, an image captured by the camera is recognized as part of a user, and the sound collected by the microphone is recognized as a voice of the user, the control circuit stops the rotation of the set of driving wheels and reciprocates the weight in the predetermined direction to reciprocate the camera in the up-and-down direction.

7. The robot according to Claim 1, wherein:
a camera is attached to the frame;
a microphone that collects a sound is provided; and
if the amount of remaining electric power in the power supply is equal to or less than the predetermined value in a state in which electric power from the battery charger is not being charged, an image captured by the camera is not recognized as part of a user, and the sound collected by the microphone is recognized as a voice of the user, the control circuit stops the rotation of the set of driving wheels and reciprocates the weight in the predetermined direction to reciprocate the camera in the up-and-down direction.

8. The robot according to Claim 1, wherein:
a camera is attached to the frame;
a microphone that collects a sound is provided; and
if the amount of remaining electric power in the power supply is equal to or less than the predetermined value in a state in which electric power from the battery charger is not being charged, an image captured by the camera is not recognized as part of a user, and the sound collected by the microphone is not recognized as a voice of the user, the control circuit stops the rotation of the set of driving wheels and stops a movement of the weight.

9. The robot according to Claim 1, wherein the control circuit reciprocates the weight in the predetermined direction in a period during which the displayer reciprocates twice or more in the up-and-down direction.

10. The robot according to any one of Claims 1 to 9, wherein the control circuit increases a number of times the weight is made to reciprocate in the predetermined direction per unit time as the amount of remaining electric power in the power supply is lessened.

11. The robot according to any one of Claims 1 to 10, wherein the control circuit increases an amount of movement in which the weight is made to reciprocate in the predetermined direction as the amount of remaining electric power in the power supply is lessened.

12. The robot according to Claim 1, wherein if the amount of remaining electric power in the power supply is equal to or less than the predetermined value in a state in which electric power from the battery charger is not being charged, the control circuit first reciprocates the weight in the predetermined direction, after which the control circuit stops the rotation of the set of driving wheels.

13. The robot according to any one of Claims 2 to 8, wherein:
the frame has
a shaft extending in a direction perpendicular to the set of driving wheels,
a first rotating mechanism that rotationally moves a position of the camera around the shaft, and
a second rotating mechanism that rotationally moves the predetermined direction around the shaft, the weight reciprocating in the predetermined direction; and
when the control circuit decides that the power supply has been connected to the external battery charger, the control circuit makes a control to place the position of the camera on an extension line in the predetermined direction in which the weight reciprocates.

14. The robot according to Claim 1, wherein:
a speaker is provided; and
if the amount of remaining electric power in the power supply is equal to or less than the predetermined value in a state in which electric power from the battery charger is not being charged, the control circuit outputs, through the speaker, voice information indicating that the amount of remaining electric power in the power supply is small.

15. The robot according to Claim 1, wherein if the amount of remaining electric power in the power supply is equal to or less than the predetermined value in a state in which electric power from the battery charger is not being charged, the control circuit uses the displayer to display display information indicating that the amount of remaining electric power in the power supply is small.

16. The robot according to Claim 1, wherein at least the part of the face of the robot, the part being displayed on the displayer, is an eye.

17. The robot according to Claim 1, wherein at least the part of the face of the robot, the part being displayed on the displayer, is a mouth.
